# EUROPÄISCHE PATENTSCHRIFT

(11) **EP 1 014 163 B1**
(45) Veröffentlichungstag und Bekanntmachung des Hinweises auf die Patenterteilung: **12.02.2003**
(21) Anmeldenummer: 99250444.9
(22) Anmeldetag: 22.12.1999
(51) Int. Cl.: G03B 1/42, G03B 19/18, G03B 17/28

(54) **Filmführung für eine Laufbildkamera**
Film guide for a motion picture camera
Guide de film pour caméra cinématographique

(30) Priorität: 23.12.1998 DE 19860712
(43) Veröffentlichungstag der Anmeldung: 28.06.2000
(73) Patentinhaber: ARNOLD & RICHTER CINE TECHNIK GMBH & CO. BETRIEBS KG, 80799 München (DE)
(72) Erfinder: Popp, Thomas, 81925 Müchen (DE); Grosser, Klaus, 86343 Königsbrunn (DE)
(74) Vertreter: Ninnemann, Detlef, Dipl.-Ing.

(56) Entgegenhaltungen:
- DE-A- 2 114 485
- DE-U- 8 531 946
- PATENT ABSTRACTS OF JAPAN vol. 017, no. 235 (P-1533), 12. Mai 1993 (1993-05-12) -& JP 04 362621 A (KYOCERA CORP), 15. Dezember 1992 (1992-12-15)
- PATENT ABSTRACTS OF JAPAN vol. 010, no. 180 (P-471), 24. Juni 1986 (1986-06-24) -& JP 61 027527 A (CANON INC), 7. Februar 1986 (1986-02-07)
- HTW-GMBH GERMANY: "Sigradur: Sorten, Eigenschaften etc." INTERNET, [Online] XP002136033 Retrieved from the Internet: <URL:http://www.htw-germany.com/1024_768_d e.shtml> [retrieved on 2000-04-17]

## Beschreibung

Die Erfindung betrifft eine Filmführung für eine Laufbildkamera gemäß dem Oberbegriff des Anspruchs 1.

Filmführungen für Laufbildfilme in Laufbildkameras weisen ein im optischen Strahlengang des Aufnahmeobjektivs der Laufbildkamera angeordnetes Abstandsfenster auf, das aus einem Bildfenster, das die Größe der zu belichtenden Fläche der Einzelbilder des Laufbildfilmes bestimmt, in Längsrichtung des Laufbildfilmes verlaufenden, an die Seitenkanten des Laufbildfilmes angrenzenden Seitenwänden und einer dem Bildfenster gegenüberliegenden Andruckplatte besteht, zwischen denen der Laufbildfilm bewegt wird. Bildfenster, Andruckplatte und Seitenwände bilden somit einen Filmführungskanal, der den Laufbildfilm in einer Bildebene festlegt, so daß ein konstantes Auflagemaß, d.h. eine gleichbleibende Fokussierungsebene für den Laufbildfilm während des Filmtransports gewährleistet ist. In den seitlichen Stegen sind Nuten bzw. Bohrungen zur Aufnahme der Greiferspitzen sowie gegebenenfalls eines Sperrgreifers eines Filmtransportmechanismus für den Filmtransport und die Sicherung eines Bildstandes vorgesehen.

Laufbildfilme bestehen üblicherweise aus einer Unterlage aus Triazetat oder Polyester mit hoher Reißfestigkeit und Maßhaltigkeit sowohl bei normalen als auch bei sehr hohen Bildgeschwindigkeiten, einer auf der einen Seite der Unterlage (der Vorderseite des Laufbildfilmes) angebrachten lichtempfindlichen Emulsion, die nach außen durch eine Schutzschicht abgedeckt ist, und einer auf der anderen Seite der Unterlage angebrachten Rück- oder Gleitschicht, die im allgemeinen zur Vermeidung von statischen Verblitzungen auf dem Laufbildfilm antistatisch ausgebildet ist.

Im wesentlichen aufgrund von Reflexionen der Aufnahmestrahlen, die an der Andruckplatte auftreten, die an der Rückschicht des Laufbildfilmes anliegt, kommt es zu unerwünschten Veränderungen des Bildinhalts der Einzelbilder des Laufbildfilmes, die unter bestimmten Aufnahmebedingungen die Filmaufnahmen untauglich machen. Dieser Effekt tritt insbesondere bei Filmen ohne Antihaloschicht sowie bei Schwarz-Weiß- und Infrarot-Filmen auf. Er wird noch dadurch verstärkt, daß in vielen Anwendungsfällen die Andruckplatte zur Minimierung der Reibung am Laufbildfilm sogenannte Gleitstege aufweist, die sich wahlweise in Bewegungsrichtung des Laufbildfilmes oder quer sowie diagonal zur Bewegungsrichtung erstrecken und an der Rückschicht des Laufbildfilmes anliegen, so daß an diesen Stellen eine stärkere Reflexion als an der eigentlichen Andruckplatte auftritt, die sich im Bildinhalt als Gitterstruktur widerspiegeln.

Aus der DE 85 31 946 U1 ist eine Laufbild-Filmaufnahmekamera mit einen Filmführungskanal bildenden Führungsflächenbekannt, über die der Film in Zu- und Abführbereichen zu und von einem Bildfenster und im Bereich des Bildfensters bzw. zwischen dem Bildfenster und einer Filmandruckplatte gleitend geführt ist. Um eine minimale und gleichmäßige Reibung im Filmführungskanal und damit ein leichtes Gleiten sowie eine minimale Beanspruchung und Beschädigung des Films beim Fimtransport auch bei starken Temperaturschwankungen sicherzustellen, weisen die Führungsflächen eine wellenförmige Oberfläche auf, wobei die Wellenberge und - täler quer zur Filmlaufrichtung angeordnet sind. Damit Streulicht aus den Wellentälern keine Verwaschung der von den Rändern des Bildfensters erzeugten Berandung der belichteten Filmbilder erzeugt, ist die wellenförmige Oberfläche zumindest im Randbereich des Bildfensters chemisch geschwärzt.

Die aus der DE 85 31 946 U1 bekannte Schwärzung des Randbereichs des Bildfensters zur Vermeidung von Verwaschungen der Filmbildränder kann jedoch im Falle der Anordnung von Gleitstegen auf der Filmandruckplatte zur Minimierung der Reibung am Laufbildfilm, die an der Rückschicht des Laufbildfilmes anliegen, nicht verhindern, daß an diesen Stellen eine stärkere Reflexion als an der eigentlichen Filmandruckplatte auftritt, die sich im Bildinhalt als Gitterstruktur widerspiegelt.

Aus der JP 61 027 527 A ist eine Filmandruckplatte für eine Fotokamera bekannt, die aus einem keramischen Material besteht. Damit soll ein Reißen des Films verhindert, die Reibung beim Filmtransport verringert und eine ebene Auflage des Films in der Fokussierungsebene gewährleistet werden.

Zur Vermeidung von Rißbildungen auf einem Film infolge von Staubkörnern ist es aus der JP 4 362 621 A bekannt, die Filmandruckplatte einer Fotokamera aus Keramik herzustellen und mit einem glasartigen oder organischen Material wie Epoxydharz zu beschichten.

Aufgabe der vorliegenden Erfindung ist es, eine Filmführung mit einem Abstandsfenster der eingangs genannten Gattung zu schaffen, die bei minimaler Reibung zwischen Laufbildfilm und Filmführung eine exakte Führung des Laufbildfilmes in der Bild- oder Fokussierungsebene gewährleistet und Veränderungen des Bildinhalts aufgrund von Strahlenreflexionen an der Andruckplatte ausschließt bzw. minimiert.

Diese Aufgabe wird erfindungsgemäß durch die Merkmale des Anspruchs 1 gelöst.

Die erfindungsgemäße Lösung gewährleistet unter Einhaltung einer minimalen Reibung des Laufbildfilmes in der Filmführung des Abstandsfensters unter Sicherstellung einer exakten Führung des Laufbildfilmes im Bereich der Bild- oder Fokussierungsebene und das Vermeiden von Reflexionen des Aufnahmestrahlengangs an der Andruckplatte und dadurch hervorgerufenen Verfälschungen des Bildinhalts der Einzelbilder des Laufbildfilms.

Vorteilhafte Ausgestaltungen der erfindungsgemäßen Lösung sind den Merkmalen der Unteransprüche zu entnehmen. Insbesondere erweist es sich als vorteilhaft, wenn das Abstandsfenster eine Andruckplatte aus Glaskohle, insbesondere aus Sigradur K. Glaskohle mit darauf angeordneten und parallel zueinander in Filmtransportrichtung ausgerichteten Gleitstegen aus Glaskohle, insbesondere ebenfalls aus Sigradur® K. Glaskohle, aufweist.

Vorzugsweise werden die Gleitstege zur leichten und kostengünstigen Herstellbarkeit sowie zur dauerhaften Haltbarkeit auf die Andruckplatte aufgeklebt. Durch Anordnung der Gleitsteg in Vertiefungen der Andruckplatte, die in Längsrichtung des Filmtransports verlaufen, wird die Haltbarkeit und exakte Ausrichtung der Gleitstege noch gesteigert. Dadurch wird eine sichere Verbindung zwischen den Gleitstegen und der Andruckplatte auch bei Materialien mit unterschiedlichem Wärmeausdehnungskoeffizient sowie insgesamt eine einfache und kostengünstige Herstellung gewährleistet.

Durch Abschrägen der Gleitstege an ihren Enden wird sichergestellt, daß der Laufbildfilm vor dem Eintreten in den Bereich des Abstandsfenster sowie nach dem Verlassen des Abstandsfensters nicht beschädigt wird. Zusätzlich wird sichergestellt, daß keine Reflexionen an scharfen Kanten auftreten können.

Vorzugsweise ist die Andruckplatte rastend in das Abstandsfenster einsetzbar, so daß Andruckplatten unterschiedlicher Art für unterschiedliche Filmtypen bzw. für unterschiedliche Aufnahmebedingungen anwendbar sind.

Das Abstandfenster ist mit besonderem Vorteil als Teil eines Antriebsmoduls der Laufbildkamera ausgebildet und kann in einfacher Weise vom Antriebsmodul abgeklappt und abgenommen sowie mit diesem verbunden werden.

Anhand eines in der Zeichnung dargestellten Ausführungsbeispieles soll der der Erfindung zugrundeliegende Gedanke näher erläutert werden. Es zeigen:
- Figur 1 -: eine Seitenansicht eines Kameragehäuses einer Laufbildkamera mit geöffneter Kameratür und einer auf das Kameragehäuse aufgesetzten Filmkassette;
- Figur 2 -: eine perspektivische Sprengzeichnung eines Abstandsfensters mit Filmführung und vollflächiger Andruckplatte;
- Figur 3 -: eine perspektivische Sprengzeichnung mit einer Andruckplatte mit einem quer zur Filmführungsrichtung angeordneten Gleitsteg;
- Figur 4 -: eine perspektivische Sprengzeichnung mit einer Andruckplatte mit zwei quer zur Filmführungsrichtung angeordneten Gleitstegen;
- Figur 5 -: eine Rückseitenansicht einer Andruckplatte;
- Figur 6 -: eine teilweise geschnittene Draufsicht auf die Andruckplatte gemäß Figur 5 mit fünf in Filmführungsrichtung angeordneten Gleitstegen;
- Figur 7 -: eine Vorderseitenansicht der Andruckplatte gemäß den Figuren 5 und 6;
- Figur 8-: einen Schnitt durch die Andruckplatte gemäß Figur 7 entlang der Linie A-A;
- Figur 9 -: eine vergrößerte Darstellung des Bereichs X einer Gleitstegaufnahme der Andruckplatte gemäß Figur 8 und
- Figur 10 -: einen Schnitt durch die Andruckplatte gemäß Figur 7 entlang der Linie B-B;

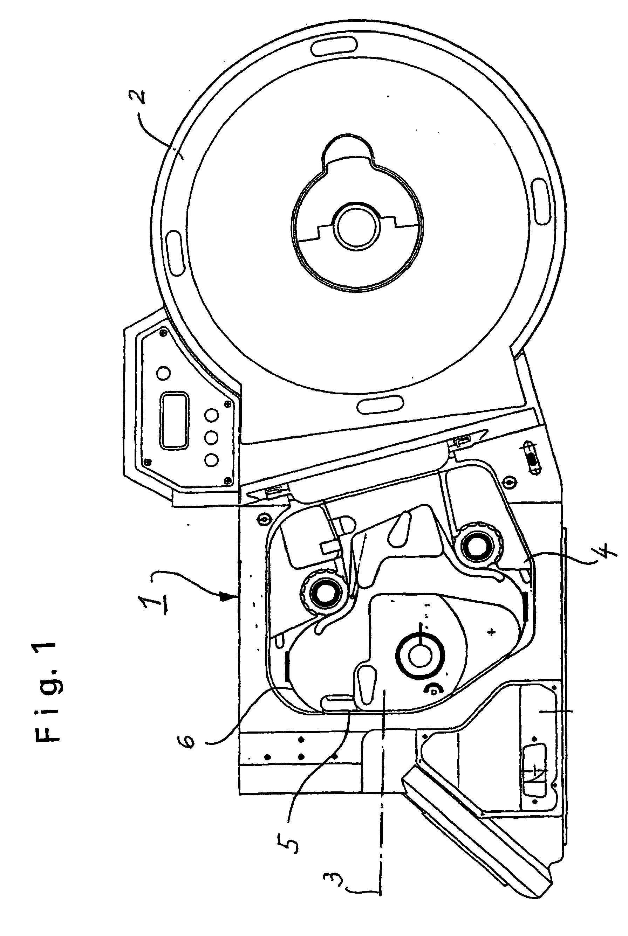

Figur 1 zeigt eine Seitenansicht einer Laufbildkamera mit einem Kameragehäuse 1 mit aufgesetzter Filmkassette 2, deren als Antriebsmodul ausgebildeter Filmtransportmechanismus 4 bei geöffneter Kameratür sichtbar ist. Der Filmtransportmechanismus umfaßt einen Filmtransportmotor, der mit einem Greifermechanismus verbunden ist, der den Laufbildfilm 6 intermittierend in einer Filmführung transportiert, die im Bereich des Antriebsmoduls als Abstandsfenster 5 ausgebildet ist, wo die einzelnen Filmbilder zur Belichtung vor einem im Aufnahmestrahlengang 3 angeordneten Bildfenster positioniert werden.

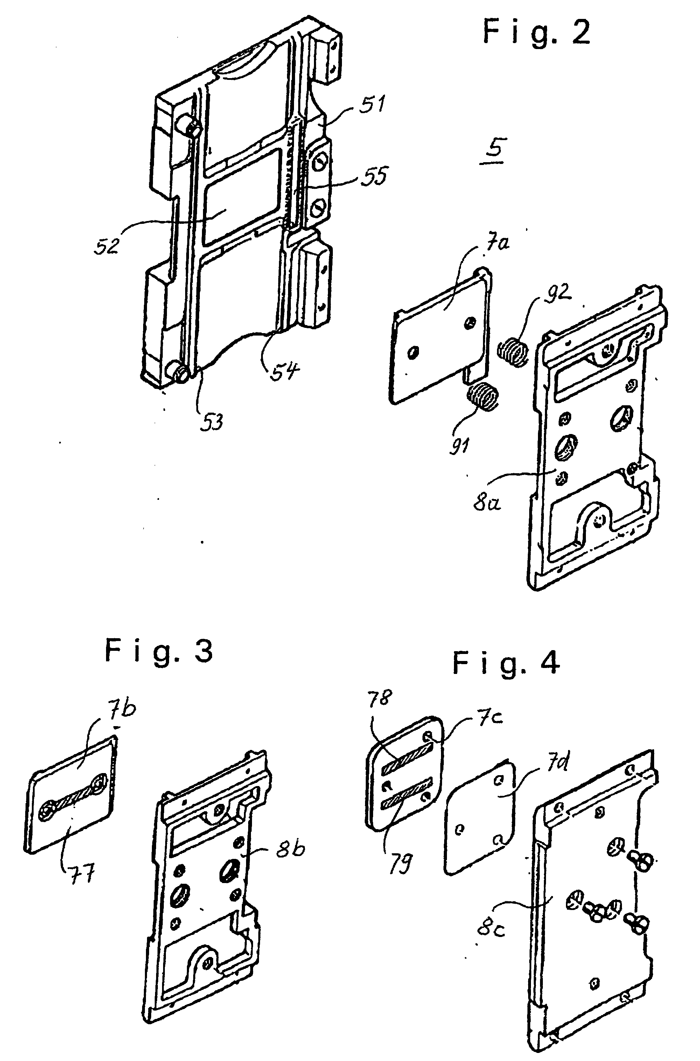

Das Abstandsfenster 5 enthält gemäß Figur 2 neben dem die zu belichtende Fläche der einzelnen Filmbilder des Laufbildfilmes bestimmenden Bildfenster 52 eine der Rückseite des Laufbildfilmes zugewandte Andruckplatte 7a, ein die Andruckplatte 7a an den Laufbildfilm andrückendes Druckstück 8a sowie seitliche Filmführungswände 53, 54 mit Nuten und Ausnehmungen 55 zur Aufnahme der Greiferspitzen der mit dem Filmtransportmotor verbundenen Transport- und Sperrgreifer.

Das Abstandsfenster 5 stellt sicher, daß der Laufbildfilm 6 in einer festgelegten Fokussierungsebene hinter dem Bildfenster 52 bewegt wird, so daß ein konstantes Auflagemaß zwischen der Bildebene und der Befestigung des Kameraobjektivs gewährleistet ist. Dies wird durch die Andruckplatte 7a und das Druckstück 8a bewirkt, die über Druckfedern 91, 92 miteinander verbunden sind, so daß die Andruckplatte 7a mit gleichbleibendem Druck an die Rückschicht des Laufbildfilmes angedrückt wird. Das Druckstück 8a selbt ist in nicht näher dargestellter Weise mit einem Schwenkmechanismus verbunden, der als Teil des Fimtransportmoduls ausgebildet ist.

In Figur 2 ist die Andruckplatte 7a als vollflächige Platte ausgebildet, die erfindungsgemäß aus schwarzem, nichtreflektierendem oder lichtabsorbierendem Material bzw. einer entsprechenden Beschichtung oder Färbung besteht.

Figur 3 zeigt eine Andruckplatte 7b mit einem quer zur Filmführungsrichtung verlaufenden Gleitsteg 77 aus Sigradur K. Glaskohle, der mittels eines der Konfiguration des Gleitsteges 77 angepaßten Druckstückes 8b an der Rückschicht eines Laufbildfilmes anliegt.

Figur 4 zeigt eine Andruckplatte 7c mit zwei parallel zueinander und quer zur Filmführungsrichtung verlaufenden Gleitstegen 78, 79 aus Sigradur K. Glaskohle, die über eine Zwischenplatte 7d und drei Bohrungen und entsprechende Verbindungsschrauben mit einem Druckstück 8c verbunden sind und an die Rückschicht eines Laufbildfilmes angedrückt werden.

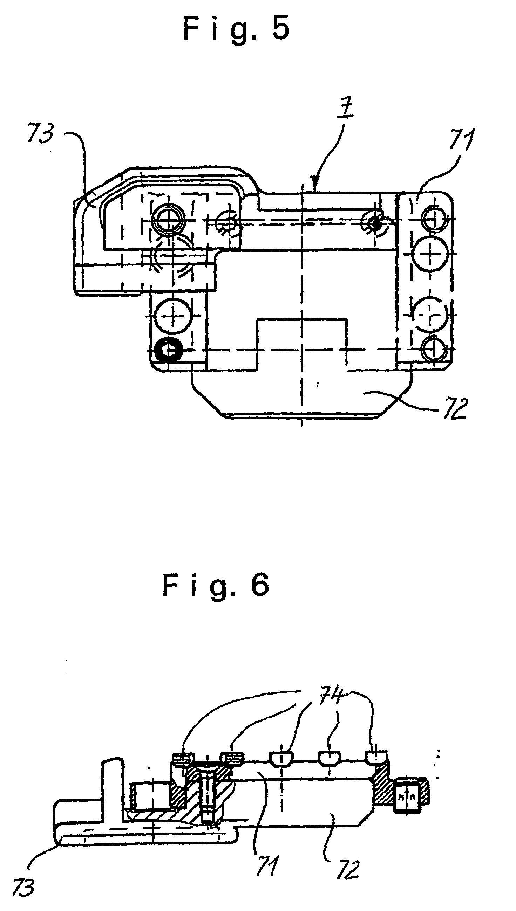

Die in den Figuren 2 bis 7 in verschiedenen Ansichten, Schnitten und Einzelteildarstellungen dargestellte Andruckplatte 7 besteht aus einem Druckstück 71, einer Halterung 72, einem Griff 73 und mehreren, im vorliegenden Ausführungsbeispiel fünf, der Rückseite des Laufbildfilmes zugewandten, langgestreckten, parallel zueinander angeordneten und in Transport- oder Filmführungsrichtung des Laufbildfilmes 6 verlaufenden Gleitstegen 74, die gemäß Figur 6 in Vertiefungen 76 der Halterung 72 eingesetzt und mit der Halterung 72 verklebt sind, vorzugsweise mit einem Zweikomponentenkleber.

Die Gleitstege 74 bestehen aus Sigradur K. Glaskohle, wobei die an der Rückseite des Films anliegenden abgeflachten Oberflächen 75 der Gleitstege 74 geschliffen und/oder poliert sind, um eine weitere Verminderung der Reibung des an den Gleitstegen 74 entlanggleitenden Laufbildfilmes 6 zu erzielen.

Die Andruckplatte 7, besteht aus einem strahlenabsorbierenden oder nichtreflektierendem Material bzw. die die Gleitstege 74 aufnehmende Oberfläche 70 der Andruckplatte 7 ist mit einem dunklen, vorzugsweise schwarzen Material überzogen, beispielsweise mit einer entsprechenden Farbe lakkiert. Es liegt auch im Rahmen der vorliegenden Erfindung, daß das gesamte Abstandsfenster 5, d.h. das Bildfenster, die seitlichen Stege und die Andruckplatte 7 aus einem strahlenabsorbierenden oder nichtreflektierendem Material besteht.

Die strahlenabsorbierende Oberfläche 70 der Andruckplatte 7 in Verbindung mit den aus Sigradur K. Glaskohle bestehenden Gleitstegen 74 verhindert eine Reflexion der Aufnahmestrahlen am Abstandsfenster 5 und damit eine entsprechende Verfälschung des Bildinhalts der Einzelbilder des Laufbildfilmes 6.

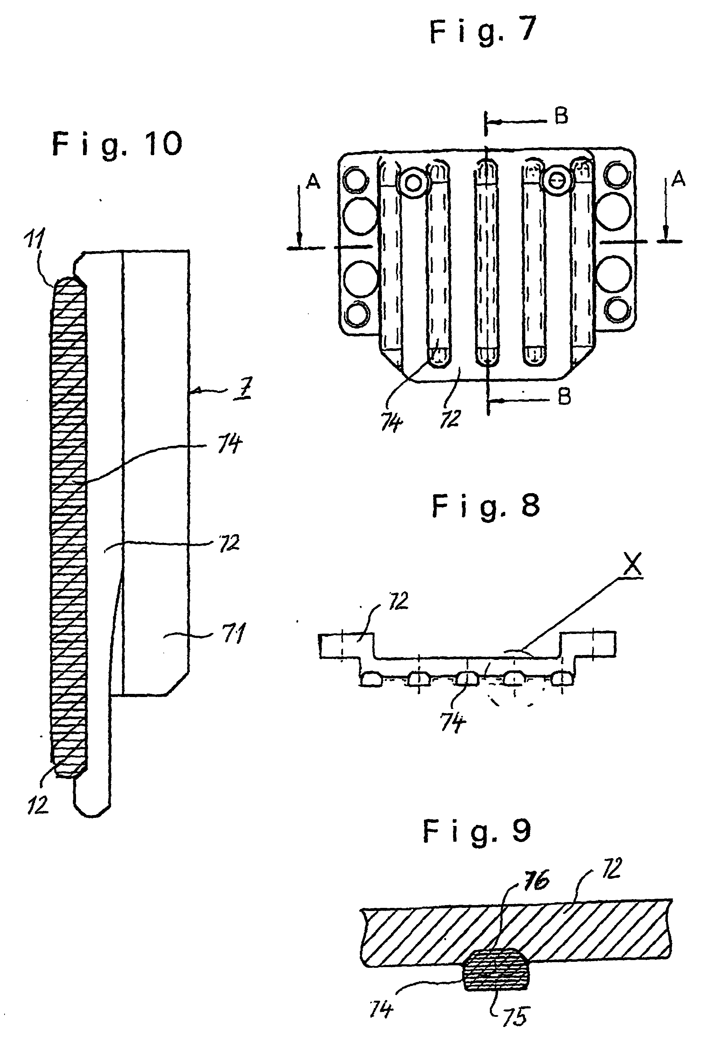

Im Bereich des Einlaufs und Auslaufs des Laufbildfilmes 6 in das Abstandsfenster 5 sind die Gleitstege 74 gemäß Figur 7 mit Schrägen 11, 12 versehen, und zusätzliche Radien an den Enden der Gleitstege 74 sorgen für eine reibungsarme Führung des Laufbildfilmes 6 sowie für eine schonende Führung des Laufbildfilmes 6. Zusätzlich werden Reflexionen an den Kanten der Gleitstege 74 vermieden.

Wie insbesondere dem Schnitt durch das Abstandsfenster 5 gemäß Figur 7 zu entnehmen ist, ist die Halterung 72 teilweise hinterschnitten, so daß eine elastische Anlage der Halterung 72 am Druckstück 71 gegeben ist.

Alternativ zu den vorstehend dargestellten, in Filmführungsrichtung oder quer zur Filmführungsrichtung auf einer Andruckplatte angeordneten Gleitstegen können diese auch schräg, insbesondere diagonal zur Filmführungsrichtung verlaufend auf der Andruckplatte befestigt oder einteilig aus der Andruckplatte herausgearbeitet werden, so daß sie integraler Bestandteil der Andruckplatte sind. Auch Kombinationen von quer ubd diagonal oder längs zur Filmführungsrichtung verlaufenden Gleitstegen liegen im Rahmen der vorliegenden Erfindung.

Weiterhin besteht die Möglichkeit, die Gleitstege selbst federnd in der Andruckplatte zu lagern und diese unmittelbar mit dem Druckstück zu verbinden bzw. als Teil des Druckstücks auszubilden.

## Patentansprüche

1. Filmführung für eine Laufbildkamera mit einem im Aufnahmestrahlengang (3) der Laufbildkamera angeordneten Abstandsfenster (5), das ein Bildfenster (52) und eine Andruckplatte (7) aufweist, zwischen denen der Laufbildfilm (6) bewegt wird, wobei zumindest die dem Laufbildfilm (6) zugewandte Oberfläche der Andruckplatte (7) strahlenabsorbierend oder nichtreflektierend ist,
**dadurch gekennzeichnet,**
**daß** die Andruckplatte (7) aus einem durchgehend schwarzen Material besteht und mindestens einen in Filmführungsrichtung, quer oder diagonal zur Filmführungsrichtung angeordneten Gleitsteg (74, 77-79) aus Glaskohle aufweist.

2. Filmführung nach Anspruch 1, **dadurch gekennzeichnet, daß** die Andruckplatte (7) zumindest teilweise aus Glaskohle besteht.

3. Filmführung nach Anspruch 1 oder 2, **dadurch gekennzeichnet, daß** die Andruckplatte (7) oder die Gleitstege (74, 77-79) aus Sigradur® K-Glaskohle besteht/bestehen.

4. Filmführung nach Anspruch 1, **dadurch gekennzeichnet, daß** die Andruckplatte (7) parallel zueinander angeordnete Gleitstege (74, 78, 79) aus Glaskohle aufweist.

5. Filmführung nach einem der vorangehenden Ansprüche, **dadurch gekennzeichnet, dass** der/die Gleitstege (74, 77-79) auf die Andruckplatte (7) aufgeklebt ist/sind.

6. Filmführung nach einem der vorangehenden Ansprüche, **dadurch gekennzeichnet, daß** die Gleitstege (74, 77-79) in länglichen, in Filmtransportrichtung verlaufenden Vertiefungen (76) der Andruckplatte (7) angeordnet sind.

7. Filmführung nach einem der vorangehenden Ansprüche, **dadurch gekennzeichnet, daß** die Gleitstege (74, 77-79) an ihren Enden abgeschrägt sind.

8. Filmführung nach einem der vorangehenden Ansprüche, **dadurch gekennzeichnet, daß** die Gleitstege (74, 77-79) geschliffen und/oder poliert sind.

9. Filmführung nach einem der Ansprüche 1 bis 3, **dadurch gekennzeichnet, daß** die Andruckplatte (7) in der Ebene senkrecht zur Laufbildfilmebene zumindest teilweise elastisch ausgebildet ist.

10. Filmführung nach einem der Ansprüche 1 bis 3, **dadurch gekennzeichnet, daß** die Andruckplatte (7) rastend in das Abstandsfenster (5) einsetzbar ist.

11. Filmführung nach einem Ansprüche 1 bis 3, **dadurch gekennzeichnet, daß** das Abstandsfenster (5) vorzugsweise gelenkig und trennbar mit einem Antriebsmodul (4) der Laufbildkamera (1) verbunden ist.

## Claims

1. Film guide for a motion picture camera with a spacer window (5) mounted in the recording beam path (3) of the camera and having an image window (52) and a contact pressure plate (7) between which the movie film (6) is moved whereby at least the surface of the contact pressure plate (7) facing the movie film (6) is ray-absorbing or non-reflective,
**characterised in that**
the contact pressure plate (7) consists of a continuous black material and has at least one slide track (74, 77-79) of glassy carbon which is arranged transversely or diagonal to the film guide direction.

2. Film guide according to claim 1 **characterised in that** the contact pressure plate (7) consists at least in part of glassy carbon.

3. Film guide according to claim 1 or 2 **characterised in that** the contact pressure plate (7) or the slide tracks (74, 77-79) consist of Sigradur® K-glassy carbon.

4. Film guide according to claim 1 **characterised in that** the contact pressure plate (7) has slide tracks (74, 78, 79) of glassy carbon arranged parallel to each other.

5. Film guide according to one of the preceding claims **characterised in that** the or each slide track (74, 77-79) is stuck onto the contact pressure plate (7).

6. Film guide according to one of the preceding claims **characterised in that** the slide tracks (74, 77-79) are arranged in oblong indentations (76) in the contact pressure plate (7) running in the film transport direction.

7. Film guide according to one of the preceding claims **characterised in that** the slide tracks (74, 77-79) are inclined at their ends.

8. Film guide according to one of the preceding claims **characterised in that** the slide tracks (74, 77-79) are ground and/or polished.

9. Film guide according to one of claims 1 to 3 **characterised in that** the contact pressure plate (7) is formed elastic at least in part in the plane perpendicular to the plane of the movie film.

10. Film guide according to one of claims 1 to 3 **characterised in that** the contact pressure plate (7) can be inserted with detent action in the spacer window (5).

11. Film guide according to one of claims 1 to 3 **characterised in that** the spacer window (5) is connected preferably with articulated movement and detachably to a drive module (4) of the motion picture camera (1).

## Revendications

1. Dispositif de guidage de film pour une caméra cinématographique comportant une fenêtre d'espacement (5) disposée dans le passage des rayons d'exposition (3) de la caméra cinématographique (3), qui présente une fenêtre d'image (52) et une plaque d'appui (7) entre lesquelles est déplacé le film cinématographique (6), tandis qu'au moins la surface de la plaque d'appui dirigée vers le film cinématographique (6) absorbe les rayons ou n'est pas réfléchissante,
**caractérisé en ce que**,
la plaque d'appui consiste en un matériau entièrement noir et comporte au moins une glissière (74,77-79) en carbone vitreux agencée dans le direction de guidage de film, transversalement ou diagonalement par rapport à la direction de guidage du film.

2. Dispositif de guidage de film selon la revendication 1, **caractérisé en ce que** la plaque d'appui (7) consiste au moins partiellement en carbone vitreux.

3. Dispositif de guidage de film selon la revendication 1 ou 2, **caractérisé en ce que** la plaque d'appui (7) ou la glissière (74,77-79) consistent en carbone vitreux en Sigradur ® K.

4. Dispositif de guidage de film selon la revendication 1, **caractérisé en ce que** la plaque d'appui (7) présente des glissières (74,78,79) en carbone vitreux parallèles entre elles.

5. Dispositif de guidage de film selon l'une des revendications précédentes, **caractérisé en ce que** la/les glissières (74,77-79) est/sont collée(s) sur la plaque d'appui (7).

6. Dispositif de guidage de film selon l'une des revendications précédentes, **caractérisé en ce que** les glissières (74,77-79) sont disposées dans des évidements oblongs (76) de la plaque d'appui, s'étendant dans la direction de transport du film.

7. Dispositif de guidage de film selon l'une des revendications précédentes, **caractérisé en ce que** les glissières (74,77-79) sont chanfreinées sur leurs extrémités.

8. Dispositif de guidage de film selon l'une des revendications précédentes, **caractérisé en ce que** les glissières (74,77-79) sont meulées et/ou polies.

9. Dispositif de guidage de film selon l'une des revendications 1 à 3, **caractérisé en ce que** la plaque d'appui (7) dans le plan perpendiculaire au plan du film cinématographique est conçue au moins partiellement de façon élastique.

10. Dispositif de guidage de film selon l'une des revendications 1 à 3, **caractérisé en ce que** la plaque d'appui (7) peut être montée par encliquetage dans la fenêtre d'espacement (5).

11. Dispositif de guidage de film selon l'une des revendications 1 à 3, **caractérisé en ce que** la fenêtre d'espacement (5) est de préférence raccordée de façon articulée et séparable avec un module d'entraînement (4) de la caméra cinématographique (1).
